# EUROPEAN PATENT SPECIFICATION

(11) **EP 3 938 580 B1**
(45) Date of publication and mention of the grant of the patent: **01.05.2024**
(21) Application number: 19722709.3
(22) Date of filing: 15.03.2019
(51) Int. Cl.: E01F 8/00, B64F 1/26

(54) **DOUBLE-SIDED NOISE BARRIER SUITABLE FOR GROUND RUN-UP ENCLOSURES**
DOPPELSEITIGE LÄRMSCHUTZBARRERIE FÜR BODENABBREMSPLÄTZE
BARRIÈRE ANTI-BRUIT DOUBLE FACE APPROPRIÉE POUR DES ENCEINTES POINT FIXE AU SOL

(43) Date of publication of application: 19.01.2022
(73) Proprietor: Valis- Engenharia e Inovação, S.A., 2500-755 Caldas da Rainha (PT)
(72) Inventor: MARQUES LITO VELEZ GRILO, Vasco Maria, 2500-755 Caldas da Rainha (PT)
(74) Representative: do Nascimento Gomes, Rui
(86) International application number: PCT/PT2019/050005
(87) International publication number: WO 2020/190161

(56) References cited:
- CN-A- 106 672 259
- JP-A- 2006 069 321
- US-A- 3 096 847
- US-A- 5 856 640
- US-A- 6 016 888

## Description

### FIELD OF THE INVENTION

The present invention falls within the scope of soundproofing structures for aircrafts, typically existing in airports or in any infrastructures for aircrafts. In order to adequately test and service an aircraft, the latter is required to undergo specific procedures which generate high noise in its vicinity.

Therefore, soundproofing structures based on noise barriers are used for this purpose, surrounding the aircraft, and typically leaving an open area for entry and exit of the same.

During aircraft engine testing the aircraft should preferably always face the wind, i.e., operate with headwinds. This requirement means that in certain cases two or more testing structures may be required at an airport.

It is the intention of the present invention to describe a double-sided noise barrier for providing acoustic insulation, and an expandable and modular infrastructure that incorporates it, which allows the optimization of the space occupied by such infrastructure in the view of minimizing the space allowance needed for the test site.

### PRIOR ART

The background of this invention is closely related to the noise barriers available on the market, which are typically U-shaped, protecting the surrounding areas from the noise generated by the engines of the aircraft to be tested. This U-shaped configuration means a structure with three barriers, i.e. two side barriers and one back barrier, wherein at least part of the two side barriers are parallel, including their ends which are not attached to the back barrier.

The patent application U.S. Pat. No. 6,016,888 is a clear example of this technology, presenting barriers that are intended for insulating the noise generated by an aircraft and, in the particular case of this application, showing improvements as regards the stability of airflows within the structure under conditions of irregular winds.
Another prior art concatenated ground run-up enclosure structure with at least two GREs is disclosed in US 3 096 847 A.

However, even though the state of the art provides an indication in relation to the problem of the space occupied by said structures within the area defined for the execution of tests in an airport for example, it is not disclosing particular configurations for such structures that aims a space optimization and, at the same time, maximizing the noise reduction possible with alternative testing locations, as provided in claim 1.

### SOLVED TECHNICAL PROBLEMS

This invention was aimed at solving the problem associated with the large dimensions that soundproofing structures for testing aircrafts, such as ground run-up enclosures (GRE), normally have, which does not favour optimal use of space occupied by these structures, namely when two or more structures are required due to the wind conditions typically occurring within an airport.

### SUMMARY OF THE INVENTION

As part of the claimed concatenated ground run-up enclosure of claim 1 a double-sided noise barrier, suitable for use in GRE, which comprises a support structure formed by two side surfaces provided with a plurality of sound insulating plates, wherein at least one sound insulating plate is mounted in each side surface of the support structure, is described. Such double-sided noise barrier, therefore, provides a sound absorption space ahead of each side surface of the support structure, resulting in a 360° soundproofing space around it.

It is another part of the disclosure which relates to a GRE comprised by at least one double-sided noise barrier and by one jet blast deflector. Particularly, in an advantageous configuration of a GRE as described herein, it comprises one back barrier and at least one lateral barrier, wherein at least one of the barriers, i.e. at least one lateral barrier and the back barrier, is a double-sided noise barrier. In terms of structure assembly, each of the at least one lateral barrier extends in a direction and is arranged in such a way in relation to one of the ends of the back barrier, being the angle formed between a lateral barrier and a back barrier of at least 90°.

Due to the advantageous effect provided by the use of a double-sided noise barrier, it is an object of the present invention to describe a plurality of GRE structures, comprised by at least one GRE which incorporates a double-sided noise barrier.

Particularly, it is proposed a GRE structure formed by at least one GRE, wherein a free end of at least one lateral double-sided noise barrier of a GRE is associated with, preferably connected to, an end of a back barrier or of a back double-sided noise barrier. Alternatively, at least an end or at least a free end of a back double-sided noise barrier of a GRE is connected to an end of a lateral barrier.

According to the invention, a concatenated GRE structure comprised by at least two GREs, wherein the concatenated assembly of GREs is performed by associating, preferably connecting, a free end of a lateral double-sided noise barrier of a GRE with a free end of a back barrier or of a back double-sided noise barrier of another GRE is described.

It is therefore the use of double-sided noise barriers that provide a better mode of configuring GREs structures constituted by a plurality of GREs, in the view of optimizing the space occupied by such structures and maximizing the number of GREs to be used in a limited predefined testing site, ensuring acoustic insulation as regards the noise resulting from aircrafts therein parked.

### DESCRIPTION OF FIGURES

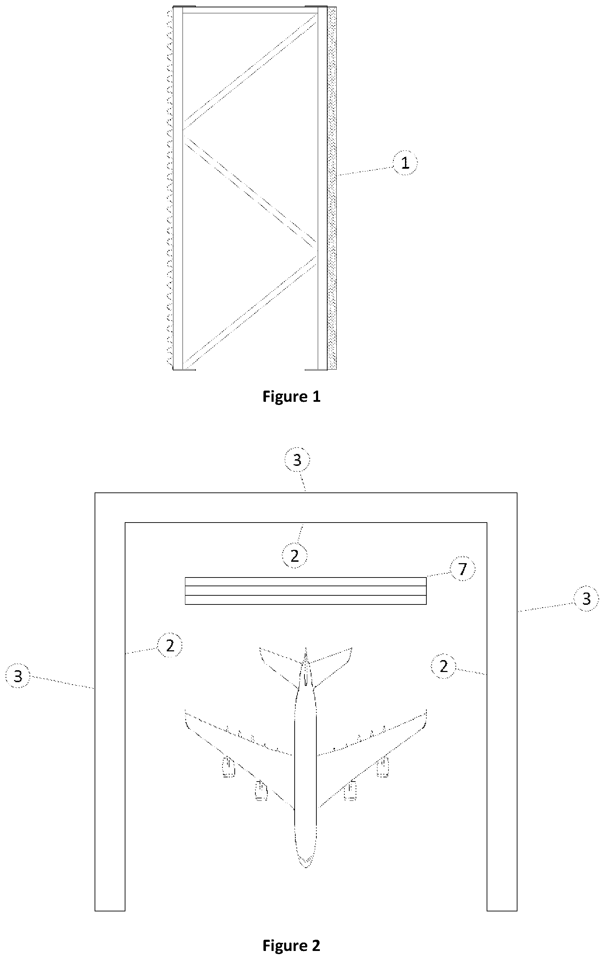

Figure 1 - representation of a state-of-the-art noise barrier which is comprised by a support structure having one noise absorbing side, where the reference signs mean:
   1 - noise absorbing element;
   2 - noise absorbing side;
   6 - external cladding.
Figure 2- representation of a state-of-the art GRE comprised by three single-sided noise barriers, where the reference signs mean:
   2 - noise absorbing side;
   3 - not noise absorbing side;
   7 - jet blast deflector.

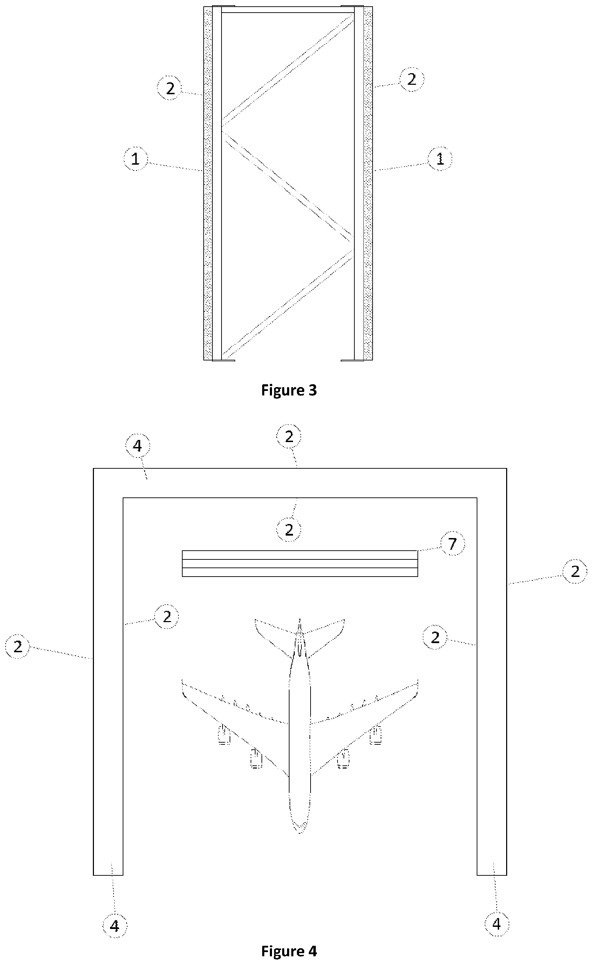

Figure 3 - representation of a double-sided noise barrier of the invention, comprised by a support structure with two noise absorbing sides, wherein the reference signs mean:
   1 - noise absorbing element;
   2 - noise absorbing side.
Figure 4 - representation of a GRE comprised by double-sided noise barriers, where the reference signs mean:
   2 - noise absorbing side;
   4 - double-sided noise barrier;
   7 - jet blast deflector.

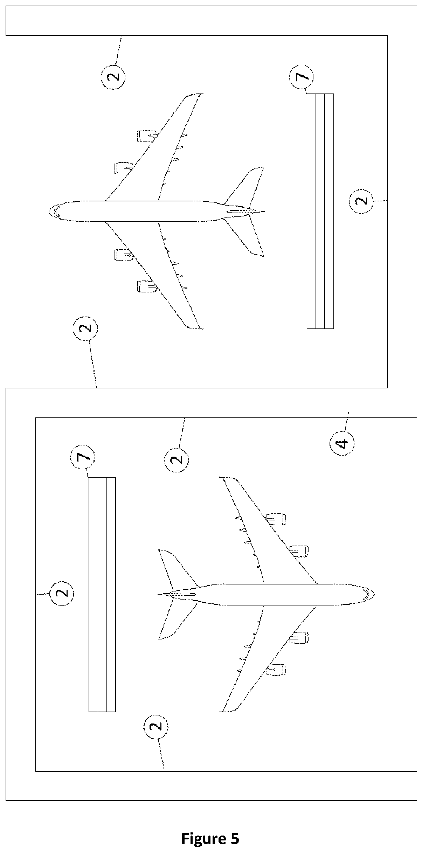

Figure 5 - representation of a concatenated GRE structure, where the reference signs means:
   2 - noise absorbing side;
   4 - double-sided noise barrier;
   7 - jet blast deflector.

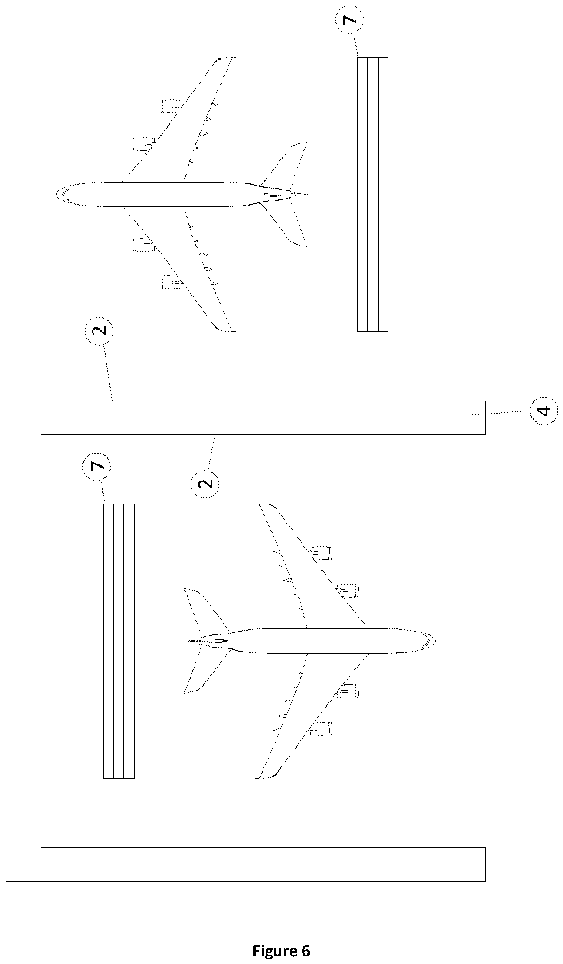

Figure 6 - representation of a GRE structure constituted by a GRE and an additional jet blast deflector, where the reference signs mean:
   2 - noise absorbing side;
   4 - double-sided noise barrier;
   7 - jet blast deflector.

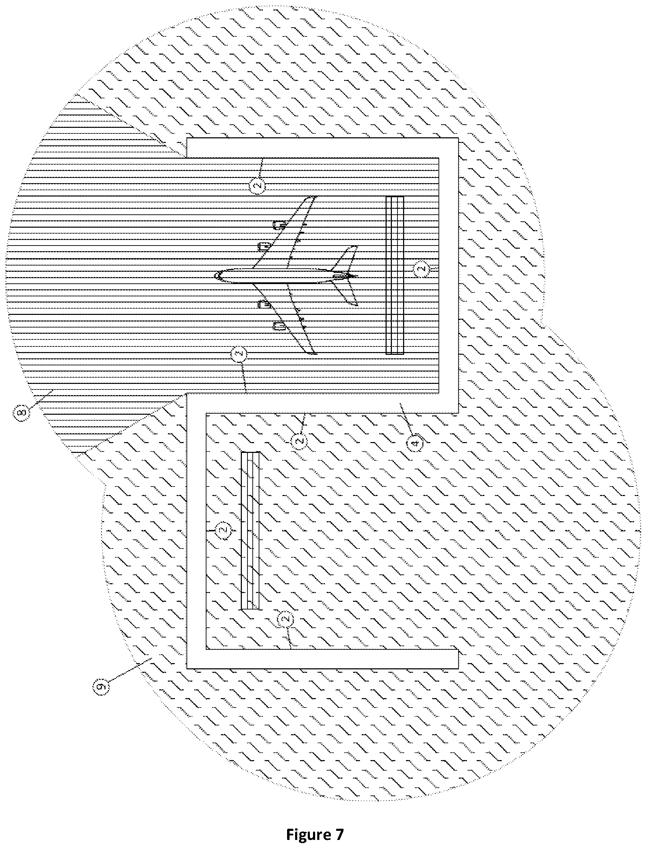

Figure 7 - representation of the noise path in a concatenated GRE structure constituted by at least one double-sided noise barrier, where the reference signs mean:
   2 - noise absorbing side;
   4 - double-sided noise barrier;
   8 - noise reflection area;
   9 - noise shadow area.

### DETAILED DESCRIPTION

The more general and advantageous configurations of the present invention are described in the Summary of the invention. Such configurations are detailed below in accordance with other advantageous and/or preferred embodiments of implementation of the present invention.

The double-sided noise barrier of the present invention comprises a support structure formed by two side surfaces provided with a plurality of sound insulating plates. At least one sound insulating plate is mounted in each side surface of the support structure, forming a sound absorbing space ahead of each. In a particular embodiment of the double-sided noise barrier, the sound insulating plates cover the entire side surface of the support structure. In another embodiment, a sound insulating plate comprises an insulation material, preferably consisting of a noise absorbing material. Yet in another embodiment, said insulator material comprises, preferably consists of, a steel or aluminium casing with perforated surface and a noise absorbing interior made from a noise absorbing material. In another embodiment, the double-sided noise barrier comprises a steel sheet cover.

The use of a double-sided noise barrier provides a 360° soundproofing space around it, which is of utmost importance in the design of GRE structures aiming to achieve space optimization.

In connection to it, the present disclosure also describes a GRE comprised by at least one double-sided noise barrier and by one jet blast deflector. In a preferred embodiment of such GRE, combinable with any above embodiments of the double-sided noise barrier herein described, it comprises one back barrier and at least one lateral barrier. Each of the at least one lateral barrier extends in a direction and is arranged in such a way in relation to one of the ends of the back barrier, forming an angle of at least 90°.

At least one of the barriers, i.e. lateral barriers and back barriers, is a double-sided noise barrier. In the context of the present invention, a lateral and a back barrier which is formed by a double-sided noise barrier is defined as a lateral double-sided noise barrier and as a back double-sided noise barrier respectively. Also, in the context of the present invention, a back barrier or a lateral barrier is a single-sided noise barrier, therefore, only able to provide a 180° soundproofing space. Accordingly, a back or a lateral barrier is a support structure which comprises sound insulating plates in only one side surface of such structure. Said sound insulating plate comprises an insulator material, and preferably are consisted of a noise absorbing material. In one embodiment, the insulator material of a barrier comprises, preferably consists of, a steel or aluminium casing with a perforated surface and a noise absorbing interior made from a noise absorbing material.

In a preferred embodiment of the GRE, it is comprised by one lateral double-sided noise barrier, one lateral barrier and one back barrier. In an alternative embodiment, the GRE is comprised by two lateral barriers and one back double-sided noise barrier. In another alternative embodiment, the GRE comprises two lateral double-sided noise barriers and one back double-sided noise barrier. The angle formed between lateral barriers or lateral double-sided noise barriers and a back barrier or a back double-sided noise barrier are equal, and the angle between a lateral and a back barrier, of a single or double-sided type, is within the range of from 95 to 130°.

In what concerns to the jet blast deflector, it is structurally disposed in the space immediately in front of a back barrier or of a back double-sided noise barrier. By immediately in front, it is to be understood that there is a minimum configurable space between the deflector and the barrier.

Respecting the main objective of the present invention, related to maximizing the number of GREs and optimizing the space occupied by each structure, it is disclosed a plurality of GRE structures, which are comprised by at least one GRE composed by at least on double-sided noise barrier. By means of the technical advantageous provided with the use of a double-sided noise barrier, which offers a 360° soundproofing space around its support structure, it is possible to develop GRE structures that enable optimization of space in the assembly of a set of individual GREs.

By the invention, it is proposed a concatenated GRE structure comprised by at least two GREs, wherein the concatenated assembly of GREs is performed by connecting, a free end of a lateral double-sided noise barrier of a GRE with an end of a back barrier or of a back double-sided noise barrier of another GRE.

In another preferred embodiment, it is proposed a GRE structure comprised by at least one GRE, wherein at least one additional jet blast deflector can be structurally disposed laterally in relation to each lateral double-sided noise barrier of a GRE. In that way, and contrary to the embodiments referred above, the additional blast deflectors are not associated to any single or double-sided back barriers, being positioned in such a way to take advantage of the 180º soundproofing space provided by each lateral double-sided noise barrier of the GRE and not having any back barrier - single or double-sided - behind it.

As will be clear to one skilled in the art, the present invention should not be limited to the embodiments described herein, and a number of changes are possible which remain within the scope of the present invention.

Of course, the preferred embodiments shown above are combinable, in the different possible forms, being herein avoided the repetition all such combinations.

## Claims

1. A concatenated ground run-up enclosure structure comprising at least first and second ground run-up enclosures; each ground run-up enclosure comprising:
— one jet blast deflector (7); and
— at least one double-sided noise barrier (4);
wherein,
said double-sided noise barrier comprises a support structure formed by two side surfaces and provided with a plurality of sound insulating plates; wherein at least one sound insulating plate is mounted in each side surface of the support structure, forming a sound absorbing space ahead of each side surface;
and wherein,
a ground run-up enclosure is comprised by one back barrier and at least one lateral barrier, each of the at least one lateral barrier extending in a direction and arranged in such a way in relation to one of the ends of the back barrier; the angle formed between the lateral barrier and the back barrier being at least 90°;
and wherein
at least one of the barriers of each ground run-up enclosure is a double-sided noise barrier;
the structure being **characterized in that**
a free end of a lateral double-sided noise barrier of a first ground run-up enclosure is connected to an end of a back barrier or of a back double-sided noise barrier of a second ground run-up enclosure.

2. The structure according to claim 1, wherein the sound insulating plates cover the entire side surfaces of the double-sided noise barrier's support structure of a ground run-up enclosure.

3. The structure according to any of the previous claims, wherein the sound insulating plate of a ground run-up enclosure's double-sided noise barrier comprises an insulator material, preferably consisting of a noise absorbing material, and, wherein,
the insulator material comprises, preferably consists of, a steel or aluminium casing with a perforated surface and a noise absorbing interior made from a noise absorbing material.

4. The structure according to any of the previous claims wherein the ground run-up enclosure's double-sided noise barrier comprises a steel sheet cover.

5. The structure according to any of the previous claims, wherein the angle formed between lateral barriers or lateral double-sided noise barriers and a back barrier or a back double-sided noise barrier of a ground run-up enclosure is equal.

6. The structure according to any of the previous claims, wherein the angle formed between a lateral barrier or a lateral double-sided noise barrier and a back barrier or a back double-sided noise barrier of a ground run-up enclosure is within the range of from 95 to 130°.

7. The structure according to any of the previous claims, wherein the jet blast deflector is structurally disposed in the space immediately in front of a back barrier or of a back double-sided noise barrier of a ground run-up enclosure.

8. The structure according to any of the previous claims, wherein at least one additional jet blast deflector is structurally disposed laterally in relation to each lateral double-sided noise barrier of a ground run-up enclosure, and not having any back barrier or back double-sided noise barrier arranged behind it.

## Patentansprüche

1. Verkettete Bodenauflaufgehäusestruktur, die mindestens ein erstes und ein zweites Bodenauflaufgehäuse umfasst, wobei jedes Bodenauflaufgehäuse Folgendes umfasst:
- einen Strahlwindabweiser (7); und
- mindestens eine doppelseitige Lärmschutzwand (4);
wobei,
die doppelseitige Lärmschutzwand eine Trägerstruktur umfasst, die durch zwei Seitenflächen gebildet wird und mit einer Vielzahl von schalldämmenden Platten versehen ist; wobei mindestens eine schalldämmende Platte in jeder Seitenfläche der Trägerstruktur angebracht ist und einen schallabsorbierenden Raum vor jeder Seitenfläche bildet;
und wobei,
ein Bodenauflaufgehäuse aus einer hinteren Barriere und mindestens einer seitlichen Barriere besteht, wobei sich jede der mindestens einen seitlichen Barriere in einer Richtung erstreckt und so in Bezug auf eines der Enden der hinteren Barriere angeordnet ist; wobei der zwischen der seitlichen Barriere und der hinteren Barriere gebildete Winkel mindestens 90° beträgt;
und wobei
mindestens eine der Barrieren jedes Bodenauflaufgehäuses ist eine doppelseitige Lärmschutzwand;
die Struktur, die **dadurch charakterisiert** wird, dass
ein freies Ende einer seitlichen doppelseitigen Lärmschutzwand eines ersten Bodenauflaufgehäuses ist mit einem Ende einer hinteren Barriere oder einer hinteren doppelseitigen Lärmschutzwand eines zweiten Bodenauflaufgehäuses verbunden.

2. Struktur nach Anspruch 1, bei der die schalldämmenden Platten die gesamten Seitenflächen der Trägerstruktur der doppelseitigen Lärmschutzwand eines Bodenauflaufgehäuses bedecken.

3. Struktur nach einem der vorhergehenden Ansprüche, wobei die schalldämmende Platte der doppelseitigen Lärmschutzwand eines Bodenauflaufgehäuses ein Isoliermaterial umfasst, das vorzugsweise aus einem schallabsorbierenden Material besteht, und,
wobei,
das Isolationsmaterial besteht vorzugsweise aus einem Stahl- oder Aluminiumgehäuse mit einer perforierten Oberfläche und einem schallabsorbierenden Innenraum aus einem schallabsorbierenden Material.

4. Struktur nach einem der vorhergehenden Ansprüche, bei dem die doppelseitige Lärmschutzwand des Bodenauflaufgehäuses aus einer Stahlblechabdeckung besteht.

5. Struktur nach einem der vorhergehenden Ansprüche, wobei der Winkel zwischen seitlichen Barrieren oder seitlichen doppelseitigen Lärmschutzwänden und einer hinteren Barriere oder einer hinteren doppelseitigen Lärmschutzwand einer Bodenauflaufgehäuse gleich ist.

6. Struktur nach einem der vorhergehenden Ansprüche, wobei der Winkel zwischen einer seitlichen Barriere oder einer seitlichen doppelseitigen Lärmschutzwand und einer hinteren Barriere oder einer hinteren doppelseitigen Lärmschutzwand einer Bodenauflaufgehäuse im Bereich von 95 bis 130° liegt.

7. Struktur nach einem der vorhergehenden Ansprüche, wobei der Strahlwindabweiser baulich in dem Raum unmittelbar vor einer hinteren Barriere oder einer hinteren doppelseitigen Lärmschutzwand einer Bodenauflaufgehäuse angeordnet ist.

8. Struktur nach einem der vorhergehenden Ansprüche, wobei mindestens ein zusätzlicher Strahlwindabweiser baulich seitlich zu jeder seitlichen doppelseitigen Lärmschutzwand einer Bodenauflaufgehäuse angeordnet ist und keine hintere Barriere oder hintere doppelseitige Lärmschutzwand dahinter angeordnet ist.

## Revendications

1. Structure concaténée d'enceinte de point fixe au sol comprenant au moins une première et une deuxième enceintes de point fixe au sol ; chaque enceinte de point fixe au sol comprend :
- un déflecteur de souffle des réacteurs (7) ; et
- au moins une barrière antibruit double face (4) ;
dans laquelle,
ladite barrière antibruit double face comprend une structure de support formée par deux surfaces latérales et pourvue de plusieurs panneaux d'isolation acoustique ; dans laquelle au moins un panneau d'isolation acoustique est monté sur chaque surface latérale de la structure de support, formant un espace d'absorption acoustique au devant de chaque surface latérale ;
et dans laquelle,
une enceinte de point fixe au sol comprend une barrière arrière et au moins une barrière latérale, chacune des au moins une barrière latérale s'étendant dans une direction et disposée ainsi par rapport à l'une des extrémités de la barrière arrière ; l'angle formé entre la barrière latérale et la barrière arrière est d'au moins 90° ;
et dans laquelle,
au moins une des barrières de chaque enceinte de point fixe au sol est une barrière antibruit double face ;
la structure étant **caractérisée par le fait que**
une extrémité libre d'une barrière antibruit latérale double face d'une première enceinte de point fixe au sol est reliée à une extrémité d'une barrière arrière ou d'une barrière antibruit double face arrière d'une deuxième enceinte de point fixe au sol.

2. Structure selon la revendication 1, dans laquelle les panneaux d'isolation acoustique couvrent la totalité des surfaces latérales de la structure de support de la barrière antibruit double face d'une enceinte de point fixe au sol.

3. Structure selon l'une quelconque des revendications précédentes, dans laquelle le panneau d'isolation acoustique de la barrière antibruit double face d'une enceinte de point fixe au sol comprend un matériau isolant, de préférence constitué d'un matériau absorbant le bruit, et
dans laquelle,
le matériau isolant comprend, de préférence, un boîtier en acier ou en aluminium avec une surface perforée et un intérieur absorbant le bruit, fabriqué à partir d'un matériau absorbant le bruit.

4. Structure selon l'une quelconque des revendications précédentes, dans laquelle la barrière antibruit double face de l'enceinte de point fixe au sol comprend une couverture en tôle d'acier.

5. Structure selon l'une quelconque des revendications précédentes, dans laquelle l'angle formé entre les barrières latérales ou les barrières antibruit latérales double face et une barrière arrière ou une barrière antibruit arrière double face d'une enceinte de point fixe au sol est égal.

6. Structure selon l'une quelconque des revendications précédentes, dans laquelle l'angle formé entre une barrière latérale ou une barrière antibruit latérale double face et une barrière arrière ou une barrière antibruit arrière double face d'une enceinte de point fixe au sol est compris entre 95 et 130°.

7. Structure selon l'une quelconque des revendications précédentes, dans laquelle le déflecteur de souffle des réacteurs est structurellement disposé dans l'espace immédiatement devant une barrière arrière ou une barrière antibruit arrière double face d'une enceinte de point fixe au sol.

8. Structure selon l'une quelconque des revendications précédentes, dans laquelle au moins un déflecteur supplémentaire de souffle des réacteurs est structurellement disposé latéralement par rapport à chaque barrière antibruit latérale double face d'une enceinte de point fixe au sol, et n'a aucune barrière arrière ou barrière antibruit arrière double face disposée derrière lui.
